# EUROPEAN PATENT SPECIFICATION

(11) **EP 1 542 863 B1**
(45) Date of publication and mention of the grant of the patent: **31.10.2007**
(21) Application number: 03769310.8
(22) Date of filing: 24.09.2003
(51) Int. Cl.: B32B 5/24, B60R 13/08, E04B 1/84

(54) **A SOUND-ABSORBING AND SOUNDPROOFING PANEL**
SCHALLABSORBIERENDE UND SCHALLDÄMPFENDE PLATTE
PANNEAU D'ISOLATION PHONIQUE ET D'INSONORISATION

(30) Priority: 24.09.2002 IT RM20020472
(43) Date of publication of application: 22.06.2005
(73) Proprietor: Adler Plastic S.p.A., 80044 Ottaviano (IT)
(72) Inventor: SCUDIERI, Paolo, 80044 Ottaviano (IT)
(74) Representative: Gervasi, Gemma
(86) International application number: PCT/EP2003/010612
(87) International publication number: WO 2004/028796

(56) References cited:
- EP-A- 0 245 636
- EP-A- 1 031 594
- WO-A-81/01816
- US-A- 3 919 444
- US-A- 4 283 457

## Description

### Technical Field

This invention relates to a sound-absorbing and soundproofing panel. More particularly, it relates to a panel consisting of a first plastic foam layer coupled or not with a second layer of a different material; the panel has high sound-absorbing power, low impact strength, and good mechanical properties in general and is light, deformable, and able to springback slowly to its original shape after the deforming action has ceased.

### Background Art

In the area of sound-absorbing and/or soundproofing materials, several materials are known for some time now to filter and deaden sounds, utilised in specific ways depending on the particular field of application. Examples range from sophisticated and expensive engraved panels for anechoic chambers to simple plastic sheets coupled with high-damping sheets like sheet lead or high-density and low-impact strength plastic used, for example, to sound conditioning motor compartments of boats. In the automobile industry, examples of items used for sound conditioning include panels made of different fibres and/or plastic foam in combination with one layer of bitumen sheeting.

Besides varying significantly in performance (which may be very poor sometimes), the above materials have several drawbacks, such as excessive weight (for example, in the case of panels with sheet lead), voluminous size, high cost, or low mechanical strength (for example, the panels with a layer of bitumen sheeting which performance worsens over time and following exposure to low temperatures and/or temperature changes; furthermore, the panels can easily become dry, crack under the effect of the vibrations, and become detached from their support).

Attempts put forward to improve the performance of said materials have not always produced the hoped for results. This is particularly true when limited dimensions and high absorptive power are required: the use of thin materials must be compensated for with high-density matter, increasing the weight, otherwise lower sound-insulating performance or limited mechanical properties must be accepted.

For example, US patent US-5010113 refers to a flame-retardant and soundproofing polyurethane material obtained by mixing and reacting together an amino-salt of phosphoric acid, a compound containing at least two reactive hydrogens, and a compound containing at least two isocyanate radicals.

The German patent application n. 1991 41229666 describes a sound-insulating viscoelastic foam, having an adhesive surface, obtained by making stoichiometric amounts of a polyisocyanate react with at least two polyols of the polyether type, which are incompatible with each other.

Patent no. EP0884349 describes a soundproofing material consisting of a crosslinked resin - chosen from the group comprising polyolefin, polystyrene, and polychlorovinyls - and an inert filler, preferably barium sulphate (referred to in the examples).

US4283457 discloses a laminate structure for acoustical applications which comprises a porous, flexible, non-woven, needle punched mat of inherently non-burning, fine glass or other material fibers affixed as a facing to a sound absorbing, flame retardant, flexible backing such as a layer of open cell foam or a mat of glass or mineral fibers. **I** discloses also the method of manufacture of such a laminate structure. Depending upon the materials used therefor, the facing and the backing are joined together by needle punching and subsequent chemical bonding, chemical bonding, flame bonding and, in the case of an open cell foam backing, the backing may be foamed in place on the facing forming an intimate bond therewith.

However, these documents do not make it clear what actual sound absorption coefficient is obtained, nor the effect of the inert filler other than to lower the cost of the finished product and to improve heat resistance.

### Description of the Invention

It is the object of this invention to provide a sound-insulating panel that is light, easy to mould, and very pliable and features a low impact strength, good mechanical strength, and high sound-absorbing and soundproofing performance; in addition, the panel should be able to maintain these properties over time, even in the presence of temperature changes.

The panel in accordance with present invention comprises a first layer, consisting of a viscoelastic plastic foam containing an inertly charged material that is uniformly dispersed, coupled with a second layer consisting of a material chosen from the group of textile fibre mat, 100% PES, and polyethylene foam. The textile fibre mat is of known type and essentially consists of spun yarn waste of different types.

Said first layer of the panel preferably consists of a viscoelastic polyurethane foam made in compliance with state-of-the-art techniques by reacting together (i) at least one compound chosen from ethylene oxides and propylene oxides, the compound A, with (ii) an isocyanate compound, the compound B, in said polyurethane foam, being uniformly dispersed a micronized inert material, the compound C, chosen from fibreglass, artificial and natural textile fibres, silica, silicates, carbonates, and similar in combination or alone.

More specifically, the ethylene oxides and propylene oxides have a molecular weight falling within the range from 200 to 10,000, preferably from 200 to 6000, an hydroxyl number falling within the range from 20 to 1000, preferably from 20 to 800, and a functionality falling within the range from 3 to 8. These compounds are used alone (ethylene oxides or propylene oxides only) or are mixed together in accordance with known techniques. The isocyanate compound is chosen from the group comprising toluene diisocyanate, polymethylene-polyphenyl-isocyanates, and diphenylisocyanates with a molecular weight falling within the range from 200 to 8000, ideally from 200 to 6000.

Compounds A, B, and C are present in the reacting mixture in amounts expressed in percentages by weight, falling within the range from 30 to 75%, from 20 to 65%, and from 5 to 50%, respectively.

This first panel has a thickness falling within the range from 5 to 500 mm, and a specific weight falling within the range from 50 to 200 Kg/m³.

Preferably, the micronized material consists of fibreglass, silica, silicates, carbonates, and their mixtures with particle size falling within the range from 10 to 500 µm, preferably from 50 to 200 µm; anyhow, possible particle sizes fall within the range from 10 to 50 µm and from 10 to 30 µm.

Preferably, the material used to make said second layer is a felt, mat, or pressed material of natural or artificial textile fibres with a weight falling within the range from 400 to 1500 g/m² and a thickness falling within the range from 10 to 100 mm.

The first and the second layer are coupled directly in the mould or by means of gluing. The preferred version of the final panel comprises a layer of viscoelastic polyurethane foam with a specific weight falling within the range from 85 to 120, preferably from 90 to 105 Kg/m³, and containing the micronized material in amounts expressed in percentages by weight falling within the range from 60 to 80%, preferably from 65 to 75%, the remaining being said second layer having a weight falling within the range from 400 to 900 g/m², preferably from 500 to 800 g/m².

In accordance with a preferred version of this invention, said first layer features a free or visible face with impressions having a broadly curvilinear shape (ideally circular, oval, or elliptical), a maximum transversal dimension falling within the range from 5 to 15 mm, preferably from 7 to 13 mm, a depth falling within the range from 1 to 10 mm, preferably from 2 to 6 mm and a distance between centres from 1.10 to 1.80 times said maximum transversal dimension.

The following examples show the technical results obtained by some panels according to present invention, given in an absolutely exemplification way, not limiting objects and scope of the invention itself.

### Example 1

Panels were made consisting of a first layer of a polyurethane foam material obtained by reacting a mixture consisting of SPECFLEX NS 644 (made by DOW CHEMICAL), S.F. Ns 540 (made by DOW CHEMICAL), and textile fibre (polyester) in proportions of 40%, 50%, and 10%, respectively. The panels were made in three thicknesses (20, 30, and 45 mm) with a specific weight equal to 100 Kg/m³ and were coupled with a second layer consisting of a 20-mm thick mixed: textile fibres mat with a weight of 1000 g/m². The obtained products underwent sound absorption tests in compliance with ASTM E1050-90 and ASTM C384-95. The results are summarized in Table 1 in terms of % of sound absorption.

**TABLE 1**

| THICKNESS | FREQUENCY (Hz) | | | | | |
|---|---|---|---|---|---|---|
| | 1000 | 2000 | 3000 | 4000 | 5000 | 6000 |
| 20 mm | 79 | 85 | 89 | 94 | 93 | 89 |
| 30 mm | 81 | 89 | 97 | 99 | 95 | 94 |
| 45 mm | 85 | 90 | 96 | 99 | 99 | 96 |

### Example 2

A 20-mm thick first layer of material made as described in Example 1 was coupled to a second layer consisting of 100% PES; then, the resulting product underwent the sound absorption test referred to in the previous example. The panel was as it is and compressed as to reduce the thickness by 75%. The obtained results are shown in Table 2.

**TABLE 2**

| PANEL | FREQUENCY (Hz) | | | | | |
|---|---|---|---|---|---|---|
| | 1000 | 2000 | 3000 | 4000 | 5000 | 6000 |
| AS IT IS | 85 | 95 | 92 | 93 | 91 | 95 |
| COMPRESSED BY 75% | 76 | 74 | 79 | 81 | 86 | 85 |

## Claims

1. A multilayer soundproofing and sound-absorbing panel made of plastics coupled to a second suitable material, comprising a first layer consisting of a plastics foam containing a uniformly dispersed inert filler material and a second layer consisting of a textile fibre mat **characterised in that** said foam is of viscoelastic polyurethane made by reacting together (i) at least one compound chosen from ethylene oxides and propylene oxides, having a molecular weight falling within the range from 4000 to 6000, (compound A) with (ii) an isocyanate compound, (compound B), said inert filler material is micronized and chosen from fibreglass, calcium carbonate, artificial and natural textile fibres, silica, and similar in combination or alone, (compound C)

2. A panel as claimed in claim 1 wherein said ethylene and propylene oxides have an hydroxyl number falling within the range from 20 to 1000, and functionality falling within the range from 2 to 8.

3. A panel as claimed in claim 1 wherein said isocyanate compound is chosen from the group consisting of toluene diisocyanate, polymethylene-polyphenyl-isocyanates, and diphenylisocyanates.

4. A panel as claimed in claim 1 wherein said micronized material has a particle size falling within the range from 10 to 500 µm.

5. A panel as claimed in claim 4 wherein said particle size falls within the range from 50 to 200 µm.

6. A panel as claimed in claim 1 wherein said micronized material is present in said first layer in amounts expressed in percentages by weight falling within the range from 5 to 50.

7. A panel as claimed in claim 6 wherein said micronized material is present in said first layer in amounts expressed in percentages by weight falling within the range from 10 to 30.

8. A panel as claimed in claim 1 wherein said first layer features a free or visible face with impressions having a broadly curvilinear shape, ideally circular or oval or elliptical.

9. A panel as claimed in claim 8 wherein said impressions have a maximum transversal dimension falling within the range from 5 to 15 mm, a depth falling within the range from 2 to 6 mm, and a distance between centres from 1.10 to 1.80 times said maximum transversal dimension.

## Patentansprüche

1. Mehrlagige schalldämpfende und schallabsorbierende Platte, hergestellt aus Kunststoff in Verbindung mit einem zweiten geeigneten Material, wobei die genannte Platte eine erste Lage umfasst, die aus einem Kunststoffschaum besteht, der ein gleichmäßig verteiltes inertes Füllmaterial enthält, sowie eine zweite Lage, welche aus einer Textilfasermatte besteht, wobei die genannte Platte **dadurch gekennzeichnet ist, dass** der genannte Schaum aus viskoelastischem Polyurethan besteht, welches in der Weise hergestellt wird, dass man (i) mindestens eine Verbindung, die unter Ethylenoxiden und Propylenoxiden ausgewählt wird und ein Molekulargewicht im Bereich von 4.000 bis 6.000 aufweist (Verbindung A) zusammen mit (ii) einer Isocyanatverbindung (Verbindung B) reagieren lässt, wobei das genannte Füllmaterial feinstgemahlen ist und unter Glasfaser, Kalziumkarbonat, textilen Kunst- und Naturfasern, Siliziumdioxid und ähnlichen Materialien in Kombination oder einzeln gewählt wird (Verbindung C).

2. Platte nach Anspruch 1, bei welcher die genannten Ethylen- und Propylenoxide eine Hydroxylzahl aufweisen, die im Bereich von 20 bis 1000 liegt, sowie eine Funktionalität, die im Bereich von 2 bis 8 liegt.

3. Platte nach Anspruch 1, bei welcher die genannte Isocyanatverbindung aus der Gruppe ausgewählt wird, welche aus Toluendiisocyanat, Polymethylen-Polyphenylisocyanaten und Diphenylisocyanaten besteht.

4. Platte nach Anspruch 1, bei welcher das genannte feinstgemahlene Material eine Teilchengröße hat, die im Bereich von 10 bis 500 µm liegt.

5. Platte nach Anspruch 4, bei welcher die genannte Teilchengröße im Bereich von 20 bis 200 µm liegt.

6. Platte nach Anspruch 1, bei welcher das genannte feinstgemahlene Material in der genannten ersten Lage in Mengen vorliegt, die im Bereich von 5 bis 50 Gewichtsprozent liegen.

7. Platte nach Anspruch 6, bei welcher das genannte feinstgemahlene Material in der genannten ersten Lage in Mengen vorliegt, die im Bereich von 10 bis 30 Gewichtsprozent liegen.

8. Platte nach Anspruch 1, bei welcher die genannte erste Lage eine freie Fläche oder Sichtfläche mit Eindrücken aufweist, welche eine weitgehend krummlinige Gestalt haben, im Idealfall eine kreisförmige oder ovale oder elliptische Gestalt.

9. Platte nach Anspruch 8, bei welcher die genannten Eindrücke eine maximale Querabmessung im Bereich von 5 bis 15 mm, eine Tiefe im Bereich von 2 bis 6 mm und einen Abstand zwischen den Mitten vom 1,10- bis zum 1,80-fachen der genannten maximalen Querabmessung haben.

## Revendications

1. Panneau multicouche d'isolation phonique et d'insonorisation fait de plastique couplé à une seconde matière appropriée, comprenant une première couche consistant en une mousse plastique contenant une matière de charge inerte qui est uniformément dispersée et une seconde couche consistant en un tapis de fibres textiles, **caractérisé en ce que** ladite mousse est en polyuréthanne viscoélastique fait par réaction ensemble de (i) au moins un composé choisi parmi des oxydes d'éthylène et des oxydes de propylène, ayant un poids moléculaire compris entre 4000 et 6000 (composé A) avec (ii) un composé d'isocyanate (composé B), ladite matière de charge inerte est micronisée et est choisie parmi de la fibre de verre, du carbonate de calcium, des fibres textiles artificielles et naturelles, de la silice et similaire en combinaison ou seuls (composé C).

2. Panneau selon la revendication 1, où lesdits oxydes d'éthylène et de propylène ont un indice d'hydroxyle qui est compris entre 20 et 1000, et une fonctionnalité qui est comprise entre 2 et 8.

3. Panneau selon la revendication 1, où ledit composé d'isocyanate est choisi dans le groupe consistant en toluène diisocyanate, polyméthylène-polyphényl-isocyanates et diphénylisocyanates.

4. Panneau selon la revendication 1, où ladite matière micronisée a une dimension des particules qui est comprise entre 10 et 500 µm.

5. Panneau selon la revendication 4, où ladite dimension des particules tombe dans la gamme de 50 à 200 µm.

6. Panneau selon la revendication 1, où ladite matière micronisée est présente dans ladite première couche en quantités exprimées en pourcentages en poids tombant dans la gamme de 5 à 50.

7. Panneau selon la revendication 6, où la matière micronisée est présente dans ladite première couche en quantités exprimées en pourcentages en poids tombant dans la gamme de 10 à 30.

8. Panneau selon la revendication 1, où ladite première couche présente une face libre ou visible avec des impressions ayant une forme largement curviligne, de manière idéale circulaire ou ovale ou elliptique.

9. Panneau selon la revendication 8, où lesdites impressions ont une dimension transversale maximale qui est comprise entre 5 et 15 mm, une profondeur comprise entre 2 et 6 mm, et une distance entre centre de 1,10 à 1,80 fois ladite dimension transversale maximale.
